# EUROPÄISCHE PATENTSCHRIFT

(11) **EP 2 679 874 B1**
(45) Veröffentlichungstag und Bekanntmachung des Hinweises auf die Patenterteilung: **09.09.2015**
(21) Anmeldenummer: 13185702.1
(22) Anmeldetag: 24.06.2010
(51) Int. Cl.: F16L 25/01, F16L 53/00, H05B 3/40, H01R 13/00

(54) **Elektrisch beheizbare Medienleitung mit Leitungsverbinder**
Electrically heatable fluid line with line connector
Conduite de fluide à chauffage électrique avec racord de conduite

(30) Priorität: 23.06.2009 DE 202009008703 U; 24.06.2009 DE 202009008763 U; 10.09.2009 DE 202009012230 U
(43) Veröffentlichungstag der Anmeldung: 01.01.2014
(62) Teilanmeldung aus: 10730133.5
(73) Patentinhaber: Voss Automotive GmbH, 51688 Wipperfürth (DE)
(72) Erfinder: Rosenfeldt, Sascha, 51688 Wipperfürth (DE); Lechner, Martin, 51789 Lindlar (DE); Brandt, Josef, 51688 Wipperfürth (DE); Hagen, Harald, 51688 Wipperfürth (DE); Hiltemann, Ulrich, 42929 Wermelskirchen (DE); Sieper, Günter, 42853 Remscheid (DE); Berger, Markus, 51688 Wipperfürth (DE)
(74) Vertreter: Patentanwälte Dr. Solf & Zapf

(56) Entgegenhaltungen:
- EP-A1- 1 513 227
- WO-A1-2008/131993
- DE-U1-202007 010 502
- DE-U1-202007 018 086

## Beschreibung

Die vorliegende Erfindung betrifft zunächst gemäß dem Oberbegriff des Anspruchs 1 eine elektrisch beheizbare Medienleitung mit einer Fluidleitung und mindestens einem Leitungsverbinder, der aus einem mit einem Leitungsende der Fluidleitung verbundenen Fluidverbinder und einem äußeren Gehäuse besteht, wobei die Fluidleitung und der Fluidverbinder jeweils elektrische Heizmittel aufweisen, und wobei der Fluidverbinder zumindest im Bereich seiner Heizmittel und zusammen mit einem Endabschnitt der Fluidleitung kapselartig von dem Gehäuse umschlossen ist.

Derartige Medienleitungen und Leitungsverbinder können insbesondere in Kraftfahrzeugen für solche Medien eingesetzt werden, die aufgrund ihres Gefrierpunktes bereits bei relativ hohen, zumindest im Winter häufig vorkommenden Umgebungstemperaturen zum Gefrieren neigen. Dadurch können bestimmte Funktionen beeinträchtigt werden. Dies ist beispielsweise bei Wasserleitungen für die Scheibenwaschanlage der Fall, insbesondere aber bei Leitungen für eine wässrige Harnstofflösung, die als NO_{X}-Reduktionsadditiv für Dieselmotoren mit so genannten SCR-Katalysatoren eingesetzt wird. Deshalb können bei niedrigen Temperaturen die elektrischen Heizmittel aktiviert werden, um das Gefrieren zu vermeiden oder um das bereits gefrorene Medium aufzutauen.

Zum Stand der Technik sei beispielsweise auf die Veröffentlichungen DE 20 2007 009 588 U1, DE 20 2007 018 089 U1 und DE 20 2007 018 086 U1 hingewiesen.

Bei der Konfektionierung solcher Medienleitungen durch Verbinden mit mindestens einem Leitungsverbinder tritt häufig das Problem auf, dass die notwendigen elektrischen Leiter und Leiterverbindungen der Heizmittel beim Schließen des üblicherweise zweiteiligen äußeren Gehäuses des Leitungsverbinders störend zwischen die Gehäuseteile geraten können, weil sie - vgl. dazu DE 20 2007 009 588 U1 - nur lose in einem Gehäuse-Hohlraum untergebracht sind. Deshalb ist es z. B. gemäß DE 20 2007 018 089 U1 vorgesehen, die elektrischen Verbindungen mit einer Kunststoff-Formmasse zu umgeben, insbesondere durch Umspritzen oder Vergießen. Dies führt allerdings zu einem Fertigungs-Mehraufwand.

Der vorliegenden Erfindung liegt die Aufgabe zu Grunde, eine Medienleitung und einen Leitungsverbinder der beschriebenen Art so zu verbessern, dass bei einfacher und wirtschaftlicher Montage und Konfektionierung gute Gebrauchseigenschaften erreicht werden können.

Erfindungsgemäß wird dies durch die Merkmale des Anspruchs 1 erreicht. Vorteilhafte Ausgestaltungsmerkmale sind in den abhängigen Ansprüchen sowie der nachfolgenden Beschreibung enthalten.

Demnach ist erfindungsgemäß vorgesehen, dass das Gehäuse Fixiermittel zur rein mechanisch fixierenden Aufnahme des Fluidverbinders mit dem verbundenen Leitungsende sowie von elektrischen Leitern und Leiterverbindungen der Heizmittel aufweist. Durch diese Fixiermittel werden alle inneren Bestandteile mechanisch derart sicher fixiert, dass die Montage einfach und schnell durchführbar ist, ohne dass Teile, wie insbesondere elektrische Leiterabschnitte, beim Schließen des Gehäuses zwischen die Gehäuseteile geraten könnten. Ein aufwändiges Vergießen oder Umspritzen ist nicht mehr notwendig. Durch die entfallende Kunststoff-Formmasse schließt das Gehäuse vorteilhafterweise ein bestimmtes Luftvolumen ein, und man erreicht damit eine verbesserte Effektivität der elektrischen Heizmittel.

Anhand der beiliegenden Zeichnungen soll die Erfindung beispielhaft genauer erläutert werden. Dabei zeigen:
- Fig. 1: eine vergrößerte Perspektivansicht eines Endbereiches einer erfindungsgemäßen Medienleitung mit einem Leitungsverbinder in einer bevorzugten Ausführungsform,
- Fig. 2: eine Perspektivansicht wie in Fig. 1, jedoch mit geöffnetem Gehäuse des Leitungsverbinders und ohne Darstellung von Heizmitteln und deren Bestandteilen,
- Fig. 3: eine Seitenansicht zu Fig. 2 mit zusätzlicher Darstellung von äußeren elektrischen Anschlussleitern und Leiterverbindungen,
- Fig. 4: eine Ansicht wie in Fig. 3 mit beispielhafter Darstellung der Heizmittel mit deren Bestandteilen,
- Fig. 4a: einen verkleinerten Querschnitt im Leitungsbereich in der Schnittebene IV-IV gemäß Fig. 4 ohne Darstellung der Fluidleitung,
- Fig. 5: eine perspektivische Darstellung von zwei Gehäuseteilen des Gehäuses des erfindungsgemäßen Leitungsverbinders im geöffneten Zustand zur Erläuterung des Schließvorganges,
- Fig. 6: eine Seitenansicht zu Fig. 1 mit einem zusätzlichen, mit dem Gehäuse verbundenen Abzweigteil für die Anschlussleiter,
- Fig. 7: eine Seitenansicht wie in Fig. 3 mit dem zusätzlichen Abzweigteil gemäß Fig. 6 im geöffneten Zustand,
- Fig. 8: einen vergrößerten Schnitt durch einen Teil des Gehäuses des Leitungsverbinders im Bereich einer Rastverbindung in einer ersten Ausführung,
- Fig. 9: einen Schnitt analog zu Fig. 8 in einer zweiten Ausführung der Rastverbindung,
- Fig. 10: eine Seitenansicht auf den Bereich der Rastverbindung in Pfeilrichtung X gemäß Fig. 8,
- Fig. 11: eine Perspektivansicht eines Teilausschnittes eines Gehäuseteils in einer besonderen Ausgestaltung,
- Fig. 12: eine Seitenansicht ähnlich Fig. 6 in einer alternativen Ausgestaltung des Leitungsverbinders und dessen Gehäuses,
- Fig. 13: eine vergrößerte Ansicht in Pfeilrichtung XIII gemäß Fig. 3, jedoch im geschlossenen Zustand des Gehäuses und in einer um 90° gedrehten Lage,
- Fig. 14: eine Darstellung wie Fig. 13, jedoch ohne Leitungs-Umhüllung,
- Fig. 15: eine Ausschnittvergrößerung des Bereiches XV in Fig. 3,
- Fig. 16: eine Ansicht ähnlich Fig. 1 in einer weiteren Ausgestaltung der erfindungsgemäßen Medienleitung,
- Fig. 17: eine gesonderte, vergrößerte Ansicht eines Einzelteils aus Fig. 16,
- Fig. 18: eine weitere Darstellung ähnlich Fig. 1 mit teilweise ausgespartem Gehäuse zur Einsicht auf eine weitere Ausgestaltung und
- Fig. 19: eine Ansicht ähnlich Fig. 2 in einer Ausführungsvariante zu Fig. 18.

In den verschiedenen Figuren der Zeichnung sind gleiche Teile stets mit den gleichen Bezugszeichen versehen.

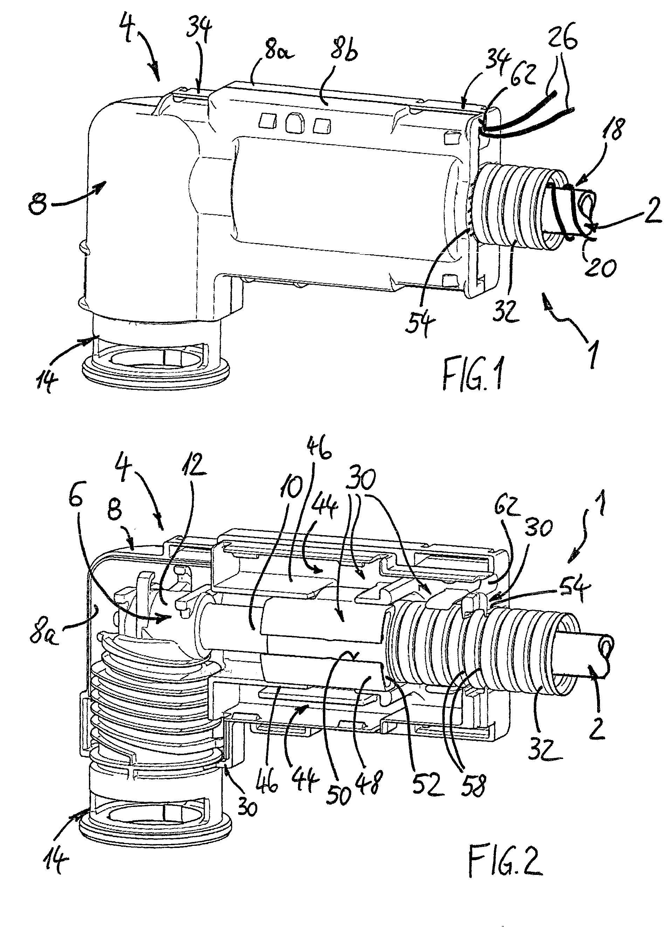

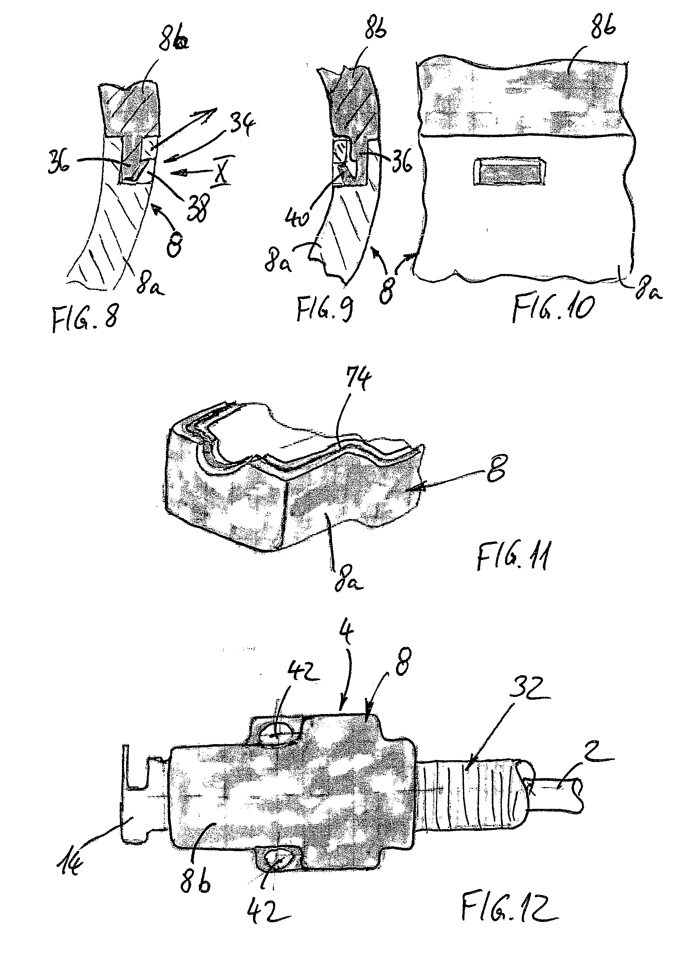

Eine erfindungsgemäße, konfektionierte und elektrisch beheizbare Medienleitung 1 besteht aus einer Fluidleitung 2, die zumindest einendig mit einem Leitungsverbinder 4 verbunden ist. Üblicherweise wird für die meisten Anwendungen die Fluidleitung 2 beidendig mit je einem Leitungsverbinder 4 verbunden. Dabei kann es sich bei jedem Leitungsverbinder 4 wahlweise um einen Winkelverbinder (Fig. 1 bis 7) oder um einen geradlinigen Verbinder handeln (beispielhaft in Fig. 12 dargestellt).

Der erfindungsgemäße Leitungsverbinder 4 besteht aus einem inneren Fluidverbinder 6 und einem äußeren Gehäuse 8. Der Fluidverbinder 6 weist mindestens einen Anschlussabschnitt 10 (s. hierzu insbesondere Fig. 2) zur mediendichten Anschlussverbindung mit einem Leitungsende der Fluidleitung 2 auf. An den Anschlussabschnitt 10 schließt sich ein Übergangsabschnitt 12 an, der vorzugsweise in einen zweiten Anschlussabschnitt 14 übergeht, der bevorzugt als Steckanschluss eines Fluid-Stecksystems ausgebildet ist. In den dargestellten Beispielen ist der Steckanschluss als Muffe zur Aufnahme eines nicht dargestellten Fluidsteckers ausgebildet. Alternativ kann der zweite Anschlussabschnitt 14 jedoch auch als Stecker ausgebildet sein. Außerdem kann der Fluidverbinder 6 auf der Seite des zweiten Anschlussabschnittes 14 auch entweder direkt mit einem beliebigen Aggregat verbunden oder analog zu dem ersten Anschlussabschnitt 10 zur Verbindung mit einer weiteren Fluidleitung ausgebildet sein. Durch den Fluidverbinder 6 verläuft ein innerer, die Anschlussabschnitte 10, 14 verbindender Fluidkanal.

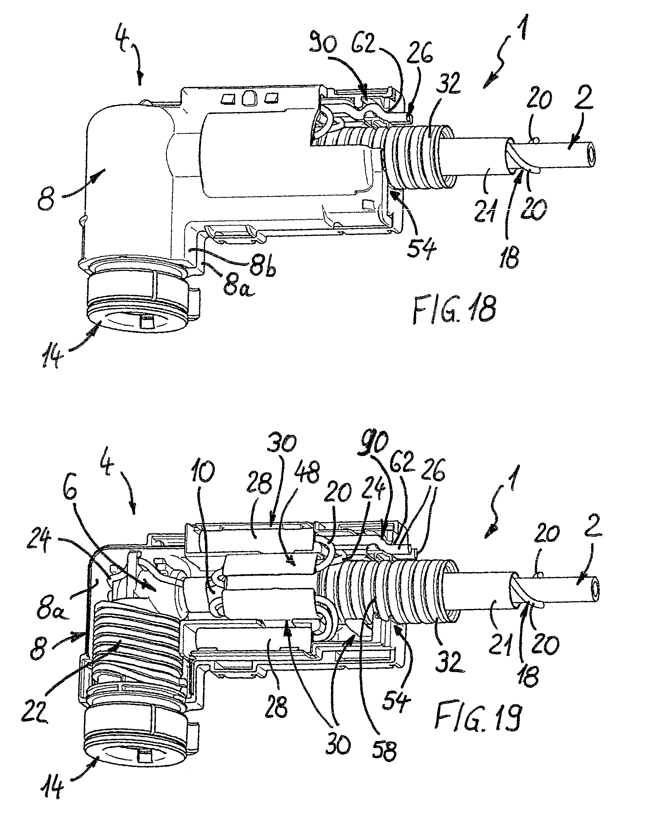

Die Fluidleitung 2 ist mit elektrischen Heizmitteln 18 insbesondere in Form von mindestens einem bevorzugt schraubenlinienförmig über den Umfang der Fluidleitung 2 verlaufenden Heizleiter 20 ausgestattet. Der oder die Heizleiter 20 können mittels einer die Fluidleitung 2 unter Einschluss der Heizleiter 20 eng umschließenden Fixierlage 21 (nur in Fig. 18 und 19 angedeutet), beispielsweise mittels mindestens eines schraubenlinienförmig um die Fluidleitung 2 gewickelten Klebebandes, oder auf andere geeignete Weise auf der Fluidleitung 2 fixiert sein.

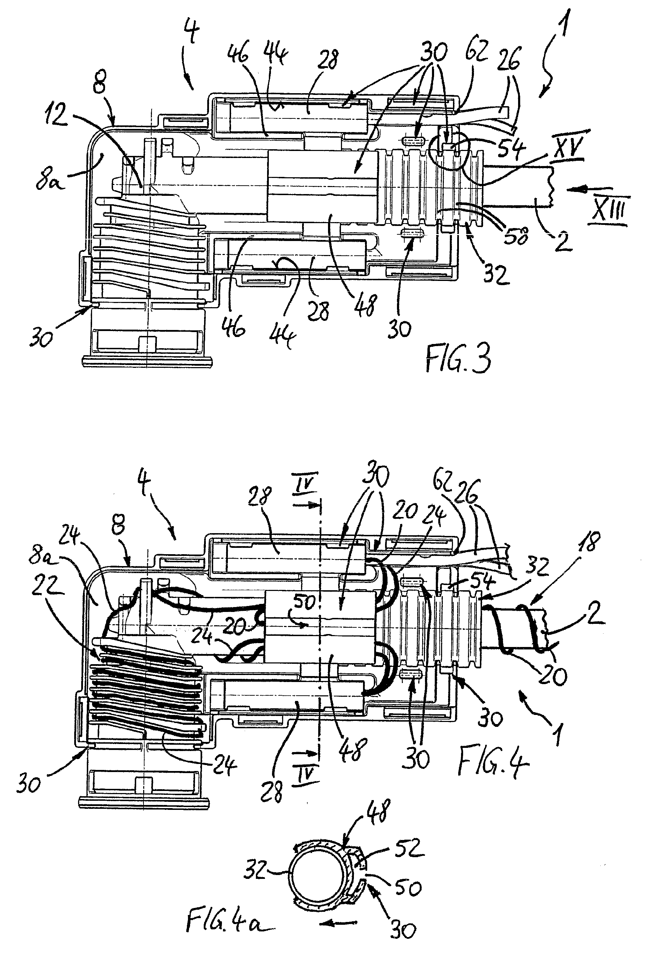

Weiterhin ist auch der Leitungsverbinder 4 bzw. der innere Fluidverbinder 6 mit elektrischen Heizmitteln 22 ausgestattet (siehe Fig. 4), die bevorzugt ebenfalls von mindestens einem über die Außenfläche des Fluidverbinders 6 verlaufenden Heizleiter 24 gebildet sind. Zweckmäßig besteht auch der Heizleiter 24 aus einem gewickelten Hinleiter und einem ebenfalls gewickelten oder auf kurzem Weg geführten Rückleiter.

Wie sich nun weiterhin aus Fig. 4 ergibt, sind im Übergangsbereich zwischen der Fluidleitung 2 und dem Fluidverbinder 6 Enden der Heizleiter 20, 24 miteinander und/oder mit äußeren Anschlussleitern 26 über elektrische Leiterverbindungen 28 verbunden (verschaltet).

Hierbei ist der Fluidverbinder 6 zumindest im Bereich seiner Heizmittel 22 und zusammen mit einem Endabschnitt der Fluidleitung 2 kapselartig von dem Gehäuse 8 umschlossen.

Erfindungsgemäß weist hierbei das Gehäuse 8 Fixiermittel 30 zur ausschließlich mechanisch fixierenden Aufnahme des Fluidverbinders 6 mit dem verbundenen Leitungsende der Fluidleitung 2 sowie der Leiterverbindungen 28 mit den zugehörigen Heizleitern 20, 24 und Anschlussleitern 26 auf.

Die Fluidleitung 2 ist zusammen mit ihren Heizmitteln 18 von einer rohr- oder schlauchartigen Umhüllung 32 umschlossen. Erfindungsgemäß nehmen die Fixiermittel 30 des Gehäuses 8 auch einen Endbereich der Umhüllung 32 fixierend auf. In bevorzugter Ausgestaltung ist die Umhüllung 32 von einem Wellrohr (parallel gewelltes Schutzrohr insbesondere aus Kunststoff) gebildet.

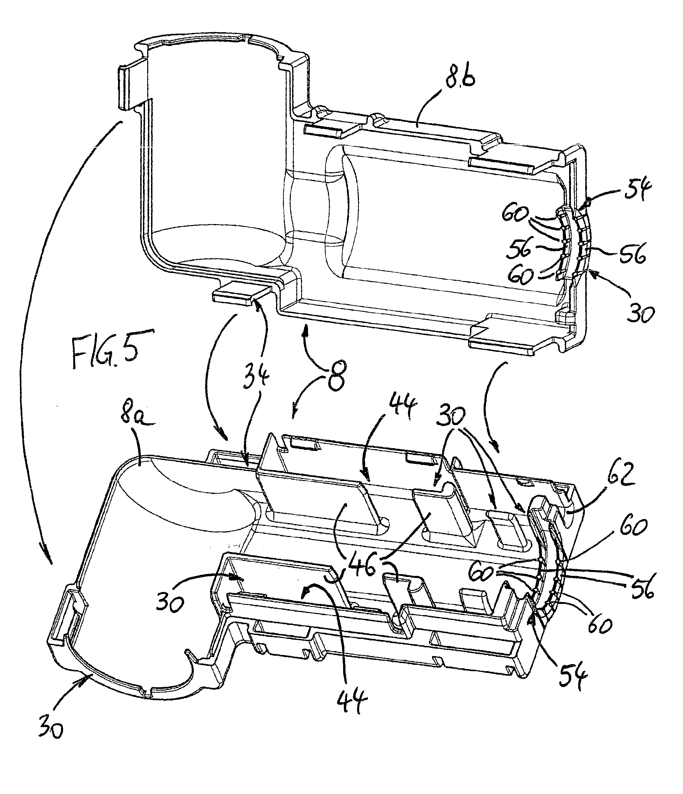

Wie sich insbesondere aus Fig. 5 ergibt, besteht das Gehäuse 8 derart aus (mindestens) zwei insbesondere halbschalenartigen Gehäuseteilen 8a und 8b, dass in einem geöffneten Zustand alle Bestandteile in das erste, als Unterteil ausgebildete Gehäuseteil 8a einsetzbar sind, so dass schon vor dem Schließen des Gehäuses 8 durch Aufsetzen des zweiten, als Oberteil ausgebildeten Gehäuseteils 8b alle inneren Bestandteile über die Fixiermittel 30 im Gehäuse 8 fixiert sind. In dem nachfolgend geschlossenen Zustand sind die Gehäuseteile 8a und 8b bevorzugt unlösbar, d. h. nicht zerstörungsfrei oder nur durch Einsatz eines Spezialwerkzeuges trennbar, miteinander verbunden. Hierdurch wird ein unberechtigtes Öffnen vermieden. In den bevorzugten Ausführungen gemäß Fig. 1 bis 10 sind die Gehäuseteile 8a, 8b über formschlüssige, nicht zerstörungsfrei zu lösende Rastverbindungen 34 verbunden. Diese Rastverbindungen 34 bestehen jeweils aus einem Rastelement, welches im geschlossenen Zustand eine Rastkante formschlüssig mit einem Hinterschneidungswinkel ≥ 90° hintergreift. Hierzu wird insbesondere auf Fig. 8 bis 10 verwiesen. Gemäß Fig. 8 greift ein Rastansatz 36 des einen Gehäuseteils (z. B. 8b) in eine Rastausnehmung 38 des anderen Gehäuseteils (z. B. 8a) formschlüssig ein. Dabei ist die Rastausnehmung 38 derart gestaltet, dass sich das Material beim Einrasten in Pfeilrichtung elastisch verformen muss. Deshalb ist nachfolgend ein Lösen nicht mehr zerstörungsfrei möglich. Im Falle der Alternative nach Fig. 9 weist der Rastansatz 36 eine Federzunge 40 auf, die bei geschlossenem Gehäuse 8 nicht mehr zum Lösen von außen zugänglich ist, weil sie in das Gehäuse-Innere weist.

In Fig. 12 ist alternativ dargestellt, dass die Gehäuseteile des Gehäuses 8 über nicht, zumindest nicht ohne ein Spezialwerkzeug, lösbare Verschraubungen 42 verbunden sind.

Was nun die erfindungsgemäßen Fixiermittel 30 betrifft, so weist das Gehäuse 8 zur Fixierung der elektrischen Leiterverbindungen 28 zwei beidseitig parallel neben dem Leitungs-Anschlussbereich angeordnete Aufnahmekammern 44 auf. Hierzu wird insbesondere auf Fig. 2 und 5 verwiesen. Die bezüglich der angeschlossenen Fluidleitung 2 und des Anschlussabschnittes 10 beidseitig diametral gegenüberliegenden Aufnahmekammern 44 werden nach innen hin von Trennwänden 46 begrenzt, die bezüglich ihres gegenseitigen Abstandes so bemessen sind, dass sie zwischen sich auch den Anschlussabschnitt 10 mit der Fluidleitung 2 bzw. deren Umhüllung 32 kraftschlüssig fixieren. Die elektrischen Leiterverbindungen 28 sind beispielsweise jeweils von einem länglichen, metallischen Verbinderelement gebildet, wobei jedes Verbinderelement von einer elektrisch isolierenden Umhüllung umgeben ist und gemeinsam mit der Umhüllung zur Fixierung und Leiter-Zugentlastung kraft- und/oder formschlüssig in die jeweilige Aufnahmekammer 44 des Gehäuses 8 eingesetzt ist. Eine zusätzliche Leiter-Zugentlastung kann optional durch eine Umschlingung der Umhüllung 32 der Fluidleitung 2 oder durch Verlegung in Mäanderform erreicht werden. Bevorzugt sind die Leiterverbindungen 28 jeweils als Crimp-Verbinder ausgebildet. Alternativ oder zusätzlich kann es sich aber auch um Löt- oder Schweißverbinder handeln. Beispielsweise kann ein erster Leiter durch Vercrimpen angeschlossen werden, und mindestens ein zweiter Leiter kann angeschweißt werden. Jede Leiterverbindung 28 kann auch als so genannte Spitzverbindung durch direktes Verdrillen von Drahtenden mit einer Isolierhülle, insbesondere einem Schrumpfschlauch, gebildet sein. In der/jeder Aufnahmekammer 44 können bevorzugt mehrere (mindestens zwei) Leiterverbindungen 28 untergebracht werden.

Zur elektrischen Isolierung wird bevorzugt jede Leiterverbindung 28 mit einer Umhüllung aus einem Schrumpfschlauch versehen. Speziell kann es sich um einen Schrumpfschlauch mit Innenkleber handeln, der thermisch aufgeschrumpft wird und sich dann stoffschlüssig mit dem elektrischen Verbinderelement und/oder mit den Leitern verbindet. Die über die Fixiermittel 30 im Gehäuse 8 fixierte Schrumpfschlauch-Umhüllung kann dadurch Zugkräfte zur Zugentlastung aufnehmen.

In weiterer vorteilhafter Ausgestaltung ist als Fixiermittel 30 für die innerhalb des Gehäuses 8 verlaufenden elektrischen Leiter (insbesondere Heizleiter 20, 24) ein gesondertes Fixierteil 48 in das Gehäuse 8 eingesetzt. Dieses Fixierteil 48 ist vorzugsweise als Clip seitlich auf die Umhüllung 32 der Fluidleitung 2 aufgerastet, wobei das Fixierteil 48 eine im Querschnitt etwa C-förmige und eine schlitzartige Leiter-Einführöffnung 50 aufweisende Aufnahme 52 für die zu fixierenden Leiter 20, 24 aufweist. Hierzu wird besonders auch auf den Schnitt in Fig. 4a verwiesen. Die Anordnung des Fixierteils 48 innerhalb des Gehäuses 8 ist so, dass die Leiter-Einführöffnung 50 nach dem Schließen des Gehäuses 8 durch das aufgesetzte Oberteil 8b verschlossen wird.

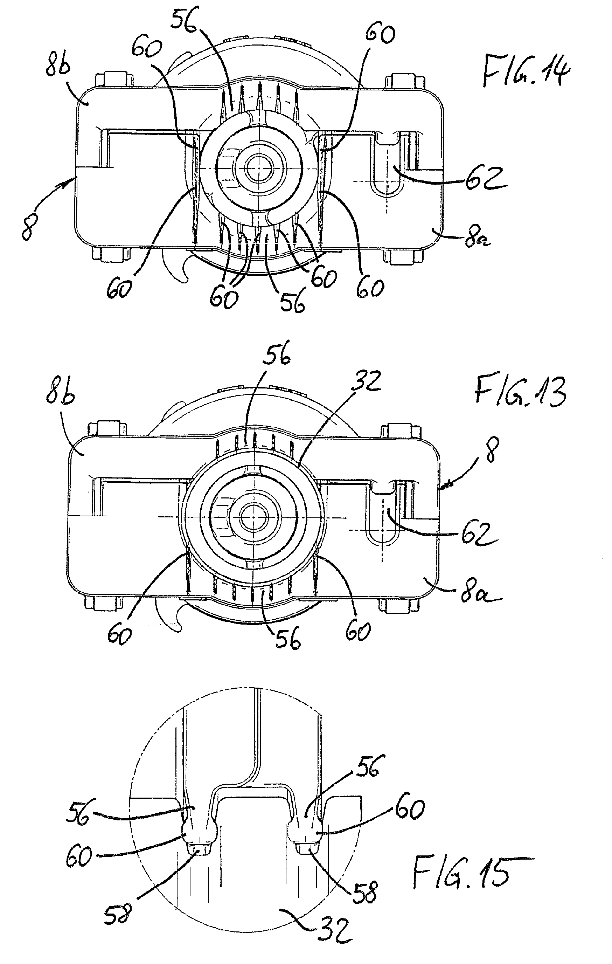

Das Gehäuse 8 weist weiterhin als Fixiermittel 30 für die Umhüllung 32 der Fluidleitung 2 einen derart ausgebildeten Aufnahmeabschnitt 54 auf, dass die Umhüllung 32 sowohl gegen Bewegungen in Längsrichtung als auch gegen Verdrehungen um ihre Längsachse fixiert ist. Bei der bevorzugten Ausgestaltung der Umhüllung 32 als Wellrohr weist der Aufnahmeabschnitt 54 eine Eingriffskontur mit inneren Umfangsrippen 56 auf, die radial in umfängliche Rillen 58 der Wellrohr-Umhüllung 32 eingreifen. Hierbei weisen die Umfangsrippen 56 gemäß Fig. 5 zahnartige Ansätze 60 auf, die kraft- und/oder formschlüssig gegen Rillenflanken der Rillen 58 der Wellrohr-Umhüllung 32 wirken. Wie sich besonders auch aus Fig. 13 bis 15 ergibt, verlaufen die Ansätze 60 im Wesentlichen senkrecht zur Teilungsebene der Gehäuseteile 8a, 8b, wobei jeweils zwei äußere Ansätze 60 des unteren Gehäuseteils 8a tangential durch eine der Rillen 58 der Wellrohr-Umhüllung 32 verlaufen (siehe Fig. 13 und 14 sowie auch Fig. 15). Durch die Ansätze 60 können bei besonderer Ausführung auch textile Umhüllungen fixiert werden.

In der ersten Ausführungsform gemäß Fig. 1 bis 5 weist das Gehäuse 8 mindestens eine Durchführöffnung 62 für den oder die Anschlussleiter 26 auf. Die Anschlussleiter 26 können dann extern an eine elektrische Versorgungsspannung angeschlossen werden.

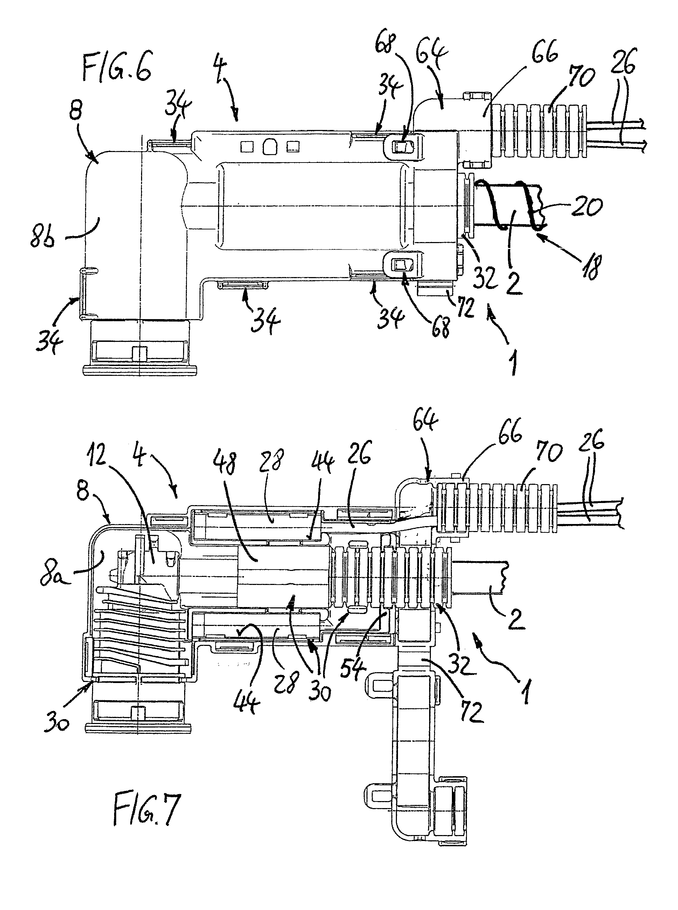

In der Ausgestaltung gemäß Fig. 6 und 7 ist ein separates, mit dem Gehäuse 8 verbundenes oder verbindbares Abzweigteil 64 mit einem Abzweig 66 für den/die Anschlussleiter 26 vorgesehen. Hierzu wird ergänzend auf die ältere Gebrauchsmusteranmeldung DE 20 2008 004 954.7 verwiesen. Das Abzweigteil 64 ist mit dem Gehäuse 8 insbesondere über Rastmittel 68 verbunden. Das Abzweigteil 64 ist im Bereich des Abzweiges 66 zur fixierenden Aufnahme eines Endbereiches einer - insbesondere von einem Wellrohr gebildeten - Leiterhülle 70 für den/die Anschlussleiter 26 ausgebildet. Gemäß Fig. 7 besteht das Abzweigteil 64 aus zwei Gehäusehälften, die bevorzugt über ein Filmscharnier 72 so einstückig miteinander verbunden sind, dass sie zum Schließen einfach zusammengeklappt und miteinander verrastet werden können. Dabei umschließt das Abzweigteil 64 dann vorzugsweise auch die Umhüllung 32 der Fluidleitung 2. Die Fixierung der Leiterhülle 70 in dem Abzweig 66 kann grundsätzlich analog zu der Fixierung der Umhüllung 32 in dem Aufnahmeabschnitt 54 des Gehäuses 8 erfolgen.

An dieser Stelle sei noch bemerkt, dass die beiden Gehäuseteile 8a und 8b des Gehäuses 8 auch gegeneinander über eine umlaufende Dichtung 74 abgedichtet sein können, wie dies beispielhaft in Fig. 11 veranschaulicht ist. Entsprechendes gilt bei Bedarf auch für das Abzweigteil 64.

Die Umhüllung 32 der Fluidleitung 2 ist in ihrem Endbereich innerhalb des Gehäuses 8 über Dichtmittel insbesondere aus Butylkautschuk relativ zu der Fluidleitung 2 und/oder zu dem Fluidverbinder 6 abgedichtet. Alternativ dazu kann hier auch ein Formdichtring, beispielsweise als Formteil aus einem geeigneten Werkstoff, wie HNBR, vorgesehen sein. Hierbei müssen lediglich die Heizdrähte durch Öffnungen gefädelt werden. Eine weitere Alternative besteht darin, eine Abdichtung mittels PU-Schaum oder dergleichen vorzusehen. Schließlich kann die Umhüllung 32 auch mittels eines Schrumpfschlauches gegen den Fluidverbinder 6 abgedichtet werden.

Als Leiterverbindungen 28 können auch so genannte Doppelcrimpverbinder verwendet werden, wobei jeder Leiter einzeln in einem Crimpabschnitt gecrimpt wird, wobei die Crimpabschnitte über einen Verbindungsabschnitt verbunden sind. Beispielsweise kann es sich um einen zunächst etwa H-förmigen Blechzuschnitt handeln, wobei im Bereich der senkrechten H-Stege jeweils ein Leiter gecrimpt werden kann. Der Quersteg der H-Form bildet den Verbindungsabschnitt.

In weiterer vorteilhafter Ausgestaltung kann zum Anschluss der Anschlussleiter 26 ein Elektro-Steckverbinder im Gehäuse 8 oder in dem Abzweigteil 64 integriert sein (in der Zeichnung nicht dargestellt).

Es ist ferner vorteilhaft, wenn alle vorhandenen Heizleiter und insbesondere auch die Anschlussleiter mit einem gleichen Außendurchmesser ausgebildet sind. Dabei können dennoch die Querschnitte der vorhandenen Heizdrähte variieren, indem dann auch die Wandstärke der Leiterisolierung entsprechend variiert.

Zweckmäßig weist das Gehäuse 8 auch im Bereich des Fluidverbinders 6 und insbesondere des zweiten Anschlussabschnittes 14 Fixiermittel insbesondere in Form von nach innen ragenden Stegen auf, die in nutartige Ausnehmungen (Hinterschnitte) des Fluidverbinders 6 eingreifen. Hierzu wird beispielsweise auf Fig. 2 bis 4 verwiesen.

Das Abzweigteil 64 kann bezüglich der Abgangsrichtung des Abzweiges 66 beliebig ausgeführt sein. Gemäß Fig. 6 und 7 weist der Abzweig 66 eine Abgangsrichtung parallel zur Fluidleitung 2 auf. Dadurch verläuft die Leiterhülle 70 parallel zur Fluidleitung 2 und deren Umhüllung 32. Alternativ kann das Abzweigteil 64 auch so ausgebildet sein, dass die Leiterhülle 70 in einem beliebigen anderen Winkel zur Leitungsachse der Fluidleitung 2 verläuft, beispielsweise 90° oder 45°.

Ergänzend sei noch bemerkt, dass als Heizdraht zum Bewickeln des Fluidverbinders 6 auch eine Überlänge des Heizdrahtes 20 der Fluidleitung 2 verwendet werden kann. Auf diese Weise kann eine Leiterverbindung (insbesondere Crimpverbindung) eingespart werden.

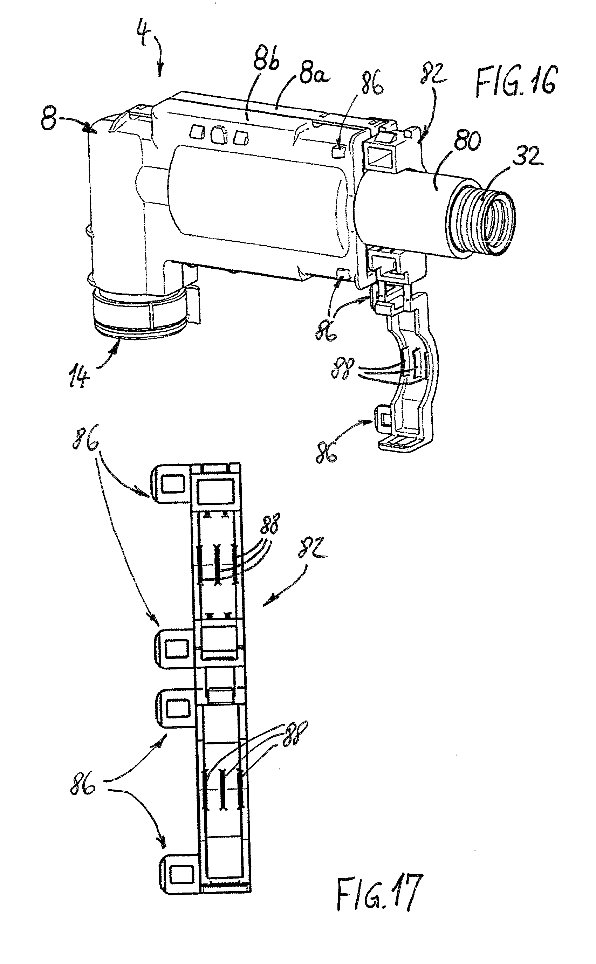

In der in Fig. 16 und 17 veranschaulichten Ausgestaltung ist die Fluidleitung 2 von einer zusätzlichen Wärmeschutzhülle 80 umschlossen, und zwar vorzugsweise unter Einschluss auch der Umhüllung 32. In Fig. 16 ist lediglich ein kurzer Endbereich der Wärmeschutzhülle 80 dargestellt, sie kann sich aber über die gesamte Länge oder zumindest über eine Teil-Länge der Fluidleitung 2 erstrecken. Hierbei ist die Wärmeschutzhülle 80 zumindest mit einem Endbereich an oder in dem Gehäuse 8 des Leitungsverbinders 4 fixiert. In der dargestellten Ausführung gemäß Fig. 16 liegt die Wärmeschutzhülle 80 mit ihrer endseitigen Stirnfläche außen vor dem Gehäuse 8, sie kann aber auch in das Gehäuse 8 hineingeführt sein. Zur Fixierung ist zweckmäßig eine Halteklammer 82 vorgesehen, die gemäß Fig. 16 und 17 aus zwei vorzugsweise über ein Filmscharnier 84 verbundenen Hälften besteht, die so zusammengeklappt und miteinander verrastet werden können, dass dann die Halteklammer 82 die Wärmeschutzhülle 80 ringförmig umschließt und kraft- und/oder formschlüssig aufnimmt. Indem die Halteklammer 82 mit dem Gehäuse 8 insbesondere über Rastmittel 86 verbunden oder verbindbar ist, wird die Wärmeschutzhülle 80 relativ zu dem Gehäuse 8 fixiert. Bevorzugt sind die Rastmittel 86 analog zu den Rastmitteln 68 des Abzweigteils 64 ausgebildet. Für eine gute zumindest kraftschlüssige und/oder formschlüssige Halterung der Wärmeschutzhülle 80 können innerhalb der Halteklammer 82 rippen- oder zahnartige Elemente 88 angeordnet sein. Die Wärmeschutzhülle 80 kann auf ihrer Außenfläche eine korrespondierende rillenartige Profilierung (nicht dargestellt) aufweisen, in die die Elemente 88 radial eingreifen können.

Die Wärmeschutzhülle 80 besteht im Wesentlichen aus einer Metall-Folie, vorzugsweise einer Aluminium-Folie, wobei sie bevorzugt eine innere Verstärkung insbesondere aus einem aufkaschierten Glasgewebe aufweisen kann. Die Metall-Folie kann auch aus (ggf. hochlegiertem) Edelstahl sowie aus mehreren Lagen, z. B. einer ersten (inneren) Aluminiumlage und einer zweiten (äußeren) Edelstahllage bestehen.

Bei den in Fig. 18 und 19 dargestellten Ausführungsvarianten sind innerhalb des Gehäuses 8 besondere Mittel zur zugentlastenden Fixierung des/der Anschlussleiter/s 26 gebildet, und zwar insbesondere in Form einer Umlenk-Klemmung 90, durch die der oder die Anschlussleiter 26 mindestens einfach (Fig. 19) oder bevorzugt mehrfach (Fig. 18) klemmend umgelenkt werden.

Die Durchführöffnung 62 für den oder die Anschlussleiter 26 kann mit einem zusätzlichen, in den Zeichnungen nicht erkennbaren Verschlusselement ausgestattet sein, welches die Anschlussleiter 26 elastisch abdichtend umschließt. Für eine Ausführung ohne Anschlussleiter 26 kann mit Vorteil ein ebenfalls nicht dargestelltes Verschlusselement, z. B. in Form eines Blindstopfens in die Durchführöffnung 62 eingesetzt werden, um das Gehäuse 8 an dieser Stelle dicht zu verschließen.

## Patentansprüche

1. Elektrisch beheizbare Medienleitung (1) mit einer Fluidleitung (2) und mindestens einem Leitungsverbinder (4), der aus einem mit einem Leitungsende der Fluidleitung (2) verbundenen Fluidverbinder (6), der mindestens einen Anschlussabschnitt (10) zur mediendichten Anschlussverbindung mit dem Leitungsende der Fluidleitung (2) aufweist, und einem äußeren Gehäuse (8) besteht, wobei die Fluidleitung (2) und der Leitungsverbinder (4) jeweils elektrische Heizmittel (18, 22) aufweisen, und wobei der Fluidverbinder (6) zumindest im Bereich seiner Heizmittel (22) und zusammen mit einem Endabschnitt der Fluidleitung (2) von dem Gehäuse (8) umschlossen ist, wobei
das Gehäuse (8) Fixiermittel (30) zur mechanisch fixierenden Aufnahme des Fluidverbinders (6) mit dem verbundenen Leitungsende sowie von elektrischen Leitern (20, 24, 26) und Leiterverbindungen (28) der Heizmittel (18, 22) aufweist, wobei die Fluidleitung zusammen mit ihren Heizmitteln (18) von einer Umhüllung (32) umschlossen ist, wobei die Fixiermittel (30) auch einen Endbereich der Umhüllung (32) fixierend aufnehmen, und wobei die Umhüllung (32) der Fluidleitung (2) in ihrem Endbereich innerhalb des Gehäuses (8) über Dichtmittel relativ zu der Fluidleitung (2) abgedichtet ist, wobei das Gehäuse (8) aus zwei miteinander verbindbaren Gehäuseteilen (8a, 8b) besteht, das als Fixiermittel (30) für die elektrischen Leiterverbindungen (28) zwei bezüglich der angeschlossenen Fluidleitung (2) und des Anschlussabschnittes (10) beidseitig diametral gegenüberliegende parallel neben dem Leitungsbereich angeordneten Aufnahmekammern (44) aufweist,
**dadurch gekennzeichnet, dass** die elektrischen Leiterverbindungen (28) jeweils von einem Verbinderelement gebildet sind, wobei jedes Verbinderelement zur Fixierung und Leiter-Zugentlastung kraft- und formschlüssig in den Aufnahmekammern (44) des Gehäuses (8) eingesetzt ist, wobei das Gehäuse (8) aus zwei halbschalenartigen Gehäuseteilen, einem Unterteil (8a) und einem Oberteil (8b), derart besteht, dass in einem geöffneten Zustand alle inneren Bestandteile in das als Unterteil ausgebildete Gehäuseteil (8a) einsetzbar und darin fixierbar sind, wobei die diametral gegenüberliegenden Aufnahmekammern (44) nach innen hin von Trennwänden (46) begrenzt sind, die bezüglich ihres gegenseitigen Abstands so bemessen sind, dass sie zwischen sich auch den Anschlussabschnitt (10) mit der Fluidleitung (2) kraftschlüssig fixieren.

2. Medienleitung nach Anspruch 1,
**dadurch gekennzeichnet, dass** die Umhüllung (32) der Fluidleitung (2) in ihrem Endbereich innerhalb des Gehäuses (8) über Dichtmittel zu dem Fluidverbinder (6) abgedichtet ist.

3. Medienleitung nach Anspruch 1 oder 2,
**dadurch gekennzeichnet, dass** die halbschalenartigen Gehäuseteile (8a, 8b) unlösbar verbunden sind.

4. Medienleitung nach Anspruch 3,
**dadurch gekennzeichnet, dass** die Gehäuseteile (8a, 8b) über formschlüssige Rastverbindungen (34) verbunden sind.

5. Medienleitung nach einem der Ansprüche 1 bis 4,
**dadurch gekennzeichnet, dass** die Verbinderelemente (28) jeweils als Crimpverbinder und/oder als Löt- oder Schweißverbinder ausgebildet sind.

6. Medienleitung nach einem der Ansprüche 2 bis 5,
**dadurch gekennzeichnet, dass** das Gehäuse (8) als Fixiermittel (30) für die Umhüllung (32) der Fluidleitung (2) einen derart ausgebildeten Aufnahmeabschnitt (54) aufweist, dass die Umhüllung (32) sowohl gegen Bewegung in Längsrichtung als auch gegen Verdrehung um ihre Längsachse fixiert ist.

7. Medienleitung nach Anspruch 6,
**dadurch gekennzeichnet, dass** der die - insbesondere von einem Wellrohr gebildete - Umhüllung (32) fixierend aufnehmende Aufnahmeabschnitt (54) eine Eingriffskontur mit radial in umfängliche Rillen (58) der Umhüllung (32) eingreifenden Umfangsrippen (56) aufweist, wobei die Umfangsrippen (56) zahnartige Ansätze (60) aufweisen, die kraft- und/oder formschlüssig gegen die Umhüllung (32) wirken.

8. Medienleitung nach einem der Ansprüche 1 bis 7,
**dadurch gekennzeichnet, dass** die Heizmittel (18) der Fluidleitung (2) von mindestens einem insbesondere schraubenlinienförmig über ihren Umfang verlaufenden Heizleiter (20) gebildet sind.

9. Medienleitung nach einem der Ansprüche 1 bis 8,
**dadurch gekennzeichnet, dass** die Heizmittel (22) des Fluidverbinders (6) von mindestens einem über seine Außenfläche hinweg verlaufenden Heizleiter (24) gebildet sind.

10. Medienleitung nach einem der Ansprüche 1 bis 9,
**dadurch gekennzeichnet, dass** mindestens ein elektrischer Anschlussleiter (26) von außen in das Gehäuse (8) geführt ist und über eine der elektrischen Leiterverbindungen (28) mit den Heizmitteln (18/22) leitend verbunden ist.

11. Medienleitung nach Anspruch 10,
**dadurch gekennzeichnet, dass** das Gehäuse (8) mindestens eine Durchführöffnung (62) für den/die Anschlussleiter (26) aufweist.

12. Medienleitung nach Anspruch 10 oder 11,
**gekennzeichnet durch** ein separates, mit dem Gehäuse (8) verbundenes oder verbindbares Abzweigteil (64) mit einem Abzweig (66) für den/die Anschlussleiter (26).

13. Medienleitung nach Anspruch 12,
**dadurch gekennzeichnet, dass** das Abzweigteil (64) zur fixierenden Aufnahme eines Endbereiches einer- insbesondere von einem Wellrohr gebildeten - Leiterhülle (70) für den/die Anschlussleiter (26) ausgebildet ist

14. Medienleitung nach einem der Ansprüche 3 bis 13,
**dadurch gekennzeichnet, dass** die Gehäuseteile (8a, 8b) des Gehäuses (8) gegeneinander über eine umlaufende Dichtung (74) abgedichtet sind.

15. Medienleitung nach einem der Ansprüche 1 bis 14,
**dadurch gekennzeichnet, dass** die Fluidleitung (2) über ihre gesamte Länge oder zumindest über eine Teil-Länge von einer Wärmeschutzhülle (80) umschlossen ist, und zwar vorzugsweise unter Einschluss der Umhüllung (32).

16. Medienleitung nach Anspruch 15,
**dadurch gekennzeichnet, dass** die Wärmeschutzhülle (80) zumindest mit einem Endbereich an oder in dem Gehäuse (8) des Leitungsverbinders (4) fixiert ist, wobei bevorzugt eine Halteklammer (82) die Wärmeschutzhülle (80) kraft- und/oder formschlüssig aufnimmt und mit dem Gehäuse (8) insbesondere über Rastmittel (86) verbunden oder verbindbar ist.

17. Medienleitung nach Anspruch 15 oder 16,
**dadurch gekennzeichnet, dass** die Wärmeschutzhülle (80) im Wesentlichen aus einer insbesondere gewebeverstärkten Metall-Folie, vorzugsweise aus einer Aluminium-Folie, besteht.

18. Medienleitung nach einem der Ansprüche 10 bis 17,
**dadurch gekennzeichnet, dass** innerhalb des Gehäuses (8) Mittel zur zugentlastenden Fixierung des/der Anschlussleiter/s (26), insbesondere in Form einer Umlenk-Klemmung (90), gebildet sind.

19. Medienleitung nach einem der Ansprüche 11 bis 18,
**gekennzeichnet durch** ein Verschlusselement zum dichtenden Verschließen der/jeder Durchführöffnung (62) mit oder ohne Anschlussleiter (26).

## Claims

1. Electrically heatable media line (1) having a fluid line (2) and at least one line connector (4), which comprises a fluid connector (6), which is connected to one end of the fluid line (2) and the at least one connection portion (10) for media-tight connection to the end of the fluid line (2), and also comprises an outer housing (8), wherein the fluid line (2) and the line connector (4) each have electrical heating means (18, 22), and wherein the fluid connector (6), at least in the region of its heating means (22) and together with an end portion of the fluid line (2), is enclosed by the housing (8), wherein the housing (8) has fixing means (30) for accommodating, with mechanical fixing action, the fluid connector (6) with the connected line end and also electrical conductors (20, 24, 26) and conductor connections (28) of the heating means (18, 22), wherein the fluid line, together with its heating means (18), is enclosed by a sheath (32), wherein the fixing means (30) also accommodates an end region of the sheath (32) with fixing action, and wherein the sheath (32) of the fluid line (2), in its end region within the housing (8), is sealed relative to the fluid line (2) via sealing means, wherein the housing (8) comprises two interconnectable housing parts (8a, 8b) and, as fixing means (30) for the electrical conductor connections (28), has two accommodating chambers (44), which are located diametrically opposite one another on either side in relation to the connected fluid line (2) and the connection portion (10) and are arranged parallel alongside the line region,
**characterized in that** the electrical conductor connections (28) are each formed by a connector element, wherein each connector element, for fixing purposes and strain relief of the conductors, is inserted in a force-fitting and form-fitting manner in the accommodating chambers (44) of the housing (8), wherein the housing (8) comprises two half-shell-like housing parts - a lower part (8a) and an upper part (8b) - such that, in an open state, all the inner constituent parts can be inserted into the housing part (8a), which is designed in the form of a lower part, and can be fixed therein, wherein the diametrically opposite accommodating chambers (44) are delimited in the inward direction by partition walls (46), which are spaced apart from one another such that they also fix between them, in a force-fitting manner, the connection portion (10) with the fluid line (2).

2. Media line according to Claim 1,
**characterized in that** the sheath (32) of the fluid line (2), in its end region within the housing (8), is sealed in relation to the fluid connector (6) via sealing means.

3. Media line according to Claim 1 or 2,
**characterized in that** the half-shell-like housing parts (8a, 8b) are connected in a non-releasable manner.

4. Media line according to Claim 3,
**characterized in that** the housing parts (8a, 8b) are connected via form-fitting latching connections (34).

5. Media line according to one of Claims 1 to 4,
**characterized in that** the connector elements (28) are each designed in the form of crimp connectors and/or in the form of solder or weld connectors.

6. Media line according to one of Claims 2 to 5,
**characterized in that** the housing (8), as fixing means (30) for the sheath (32) of the fluid line (2), has an accommodating portion (54) which is designed such that the sheath (32) is fixed both against movement in the longitudinal direction and against rotation about its longitudinal axis.

7. Media line according to Claim 6,
**characterized in that** the accommodating portion (54), which accommodates the sheath (32) - formed in particular by a corrugated tube - with fixing action, has an engagement contour with circumferential ribs (56), which engage radially in circumferential grooves (58) of the sheath (32), wherein the circumferential ribs (56) have tooth-like extensions (60), which act in a force-fitting and/or form-fitting manner against the sheath (32).

8. Media line according to one of Claims 1 to 7,
**characterized in that** the heating means (18) of the fluid line (2) are formed by at least one heating conductor (20), which runs in particular helically over the circumference of the fluid line.

9. Media line according to one of Claims 1 to 8,
**characterized in that** the heating means (22) of the fluid connector (6) are formed by at least one heating conductor (24), which runs beyond the outer surface of the fluid connector.

10. Media line according to one of Claims 1 to 9,
**characterized in that** at least one electrical connection conductor (26) is routed into the housing (8) from the outside and is connected to the heating means (18/22) in a conductive manner via one of the electrical conductor connections (28).

11. Media line according to Claim 10,
**characterized in that** the housing (8) has at least one through-opening (62) for the connection conductor/s (26).

12. Media line according to Claim 10 or 11,
**characterized by** a separate branching part (64), which is, or can be, connected to the housing (8) and has a branch (66) for the connection conductor/s (26).

13. Media line according to Claim 12,
**characterized in that** the branching part (64) is designed for accommodating with fixing action an end region of a conductor casing (70) - formed in particular by a corrugated tube - for the connection conductor/s (26).

14. Media line according to one of Claims 3 to 13,
**characterized in that** the parts (8a, 8b) of the housing (8) are sealed in relation to one another via an all-round seal (74).

15. Media line according to one of Claims 1 to 14,
**characterized in that** the fluid line (2), over its entire length or at least over part of its length, is enclosed by a heat-insulation casing (80), to be precise preferably with the inclusion of the sheath (32).

16. Media line according to Claim 15,
**characterized in that** the heat-insulation casing (80) has at least one end region fixed on or in the housing (8) of the line connector (4), wherein preferably a retaining clamp (82) accommodates the heat-insulation casing (80) in a force-fitting and/or form-fitting manner and is, or can be, connected to the housing (8) in particular via latching means (86).

17. Media line according to Claim 15 or 16,
**characterized in that** the heat-insulation casing (80) consists essentially of an in particular fabric-reinforced metal foil, preferably of an aluminium foil.

18. Media line according to one of Claims 10 to 17,
**characterized in that** means for fixing the connection conductor/s (26) with strain relief, in particular means in the form of a deflecting-type clamping device (90), are formed within the housing (8).

19. Media line according to one of Claims 11 to 18,
**characterized by** a closure element for the sealing closure of the/each through-opening (62) with or without a connection conductor (26).

## Revendications

1. Conduite de fluide à chauffage électrique (1) avec une conduite de fluide (2) et au moins un raccord de conduite (4), qui se compose d'un raccord de fluide (6) raccordé à une extrémité de conduite de la conduite de fluide (2), et qui présente au moins une partie de raccord (10) pour le raccordement étanche au fluide à l'extrémité de conduite de la conduite de fluide (2), et d'un boîtier extérieur (8), dans laquelle la conduite de fluide (2) et le raccord de conduite (4) présentent chacun des moyens de chauffage électriques (18, 22), et dans laquelle le raccord de fluide (6) est entouré au moins dans la région de ses moyens de chauffage et en même temps qu'une partie d'extrémité de la conduite de fluide (2), par le boîtier (8), dans laquelle le boîtier (8) présente des moyens de fixation (30) pour le montage mécaniquement fixe du raccord de fluide (6) avec l'extrémité de conduite raccordée ainsi qu'avec des conducteurs électriques (20, 24, 26) et des liaisons de conducteurs électriques (28) des moyens de chauffage (18, 22), dans laquelle la conduite de fluide avec ses moyens de chauffage (18) est entourée par une gaine (32), dans laquelle les moyens de fixation (30) contiennent aussi de façon fixe une région d'extrémité de la gaine (32), et dans laquelle la gaine (32) de la conduite de fluide (2) est rendue étanche dans sa région d'extrémité, à l'intérieur du boîtier (8), par un moyen d'étanchéité par rapport à la conduite de fluide (2), dans laquelle le boîtier (8) se compose de deux parties de boîtier (8a, 8b) à assembler l'une à l'autre, qui présente comme moyens de fixation (30) pour les liaisons de conducteurs électriques (28) deux chambres de réception (44), diamétralement opposées de part et d'autre par rapport à la conduite de fluide raccordée (2) et la partie de raccord (10), et disposées parallèlement à côté de la région de la conduite, **caractérisée en ce que** les liaisons de conducteurs électriques (28) sont formées respectivement par un élément de raccord, dans laquelle chaque élément de raccord est utilisé pour la fixation et le soulagement en traction des conducteurs par adhérence et emboîtement dans les chambres de réception (44) du boîtier (8), dans laquelle le boîtier (8) se compose de deux parties de boîtier en forme de demi-coquilles, une partie inférieure (8a) et une partie supérieure (8b), de telle manière que dans un état ouvert tous les composants intérieurs puissent être introduits dans la partie de boîtier (8a) formant la partie inférieure et puissent y être fixés, dans laquelle les chambres de réception (44) diamétralement opposées sont limitées vers l'intérieur par des parois de séparation (46), qui sont dimensionnées par rapport à leur distance mutuelle, de telle manière qu'elles fixent également entre elles par adhérence la partie de raccord (10) à la conduite de fluide (2).

2. Conduite de fluide selon la revendication 1, **caractérisée en ce que** la gaine (32) de la conduite de fluide (2) est rendue étanche dans sa région d'extrémité à l'intérieur du boîtier (8) par rapport au raccord de fluide (6) par des moyens d'étanchéité.

3. Conduite de fluide selon la revendication 1 ou 2, **caractérisée en ce que** les parties de boîtier en forme de demi-coquilles (8a, 8b) sont assemblées de façon inséparable.

4. Conduite de fluide selon la revendication 3, **caractérisée en ce que** les parties de boîtier (8a, 8b) sont assemblées par des assemblages encliquetés (34) à emboîtement.

5. Conduite de fluide selon l'une quelconque des revendications 1 à 4, **caractérisée en ce que** les éléments de raccord (28) sont réalisés respectivement sous la forme de raccords sertis et/ou de raccords brasés ou soudés.

6. Conduite de fluide selon l'une quelconque des revendications 2 à 5, **caractérisée en ce que** le boîtier (8) comprend comme moyen de fixation (30) pour la gaine (32) de la conduite de fluide (2) une partie de réception (54) configurée de telle manière que la gaine (32) soit fixée aussi bien contre un mouvement en direction longitudinale que contre une rotation autour de son axe longitudinal.

7. Conduite de fluide selon la revendication 6, **caractérisée en ce que** la partie de réception (54) contenant en la fixant la gaine (32) - formée en particulier par un tube ondulé - présente un contour d'engagement avec des nervures périphériques (56) qui s'engagent radialement dans des rainures périphériques (58) de la gaine (32), dans laquelle les nervures périphériques (56) présentent des saillies en forme de dents (60), qui agissent par adhérence et/ou par emboîtement contre la gaine (32).

8. Conduite de fluide selon l'une quelconque des revendications 1 à 7, **caractérisée en ce que** les moyens de chauffage (18) de la conduite de fluide (2) sont formés par au moins un conducteur de chauffage (20) s'étendant en particulier en forme d'hélice sur sa périphérie.

9. Conduite de fluide selon l'une quelconque des revendications 1 à 8, **caractérisée en ce que** les moyens de chauffage (22) du raccord de fluide (6) sont formés par au moins un conducteur de chauffage (24) s'étendant sur sa face extérieure.

10. Conduite de fluide selon l'une quelconque des revendications 1 à 9, **caractérisée en ce qu'**au moins un conducteur de raccordement électrique (26) est mené de l'extérieur dans le boîtier (8) et est raccordé de façon conductrice aux moyens de chauffage (18/22) par une des liaisons de conducteurs électrique (28).

11. Conduite de fluide selon la revendication 10, **caractérisée en ce que** le boîtier (8) présente au moins une ouverture de passage (62) pour le/les conducteur(s) de raccordement (26).

12. Conduite de fluide selon la revendication 10 ou 11, **caractérisée par** une pièce de branchement séparée (64), qui est ou peut être assemblée au boîtier (8), avec un branchement (66) pour le/les conducteur(s) de raccordement (26).

13. Conduite de fluide selon la revendication 12, **caractérisée en ce que** la pièce de branchement (64) est configurée pour la réception avec fixation d'une région d'extrémité d'une gaine de conducteur (70) - formée de préférence par un tube ondulé - pour le/les conducteur(s) de raccordement (26).

14. Conduite de fluide selon l'une quelconque des revendications 3 à 13, **caractérisée en ce que** les parties de boîtier (8a, 8b) du boîtier (8) sont rendues étanches l'une par rapport à l'autre par un joint périphérique (74).

15. Conduite de fluide selon l'une quelconque des revendications 1 à 14, **caractérisée en ce que** la conduite de fluide (2) est entourée sur toute sa longueur, ou au moins sur une partie de sa longueur, par une gaine de protection thermique (80), notamment de préférence en incluant la gaine (32).

16. Conduite de fluide selon la revendication 15, **caractérisée en ce que** la gaine de protection thermique (80) est fixée au moins avec une région d'extrémité au ou dans le boîtier (8) du raccord de conduite (4), dans laquelle une attache de retenue (82) retient de préférence la gaine de protection thermique (80) par adhérence et/ou par emboîtement et est ou peut être assemblée au boîtier (8) en particulier par des moyens d'encliquetage (86).

17. Conduite de fluide selon la revendication 15 ou 16, **caractérisée en ce que** la gaine de protection thermique (80) se compose essentiellement d'une feuille de métal en particulier renforcée par tissage, de préférence d'une feuille d'aluminium.

18. Conduite de fluide selon l'une quelconque des revendications 10 à 17, **caractérisée en ce que** des moyens sont formés à l'intérieur du boîtier (8) pour la fixation allégeant la traction du/des conducteur(s)de raccordement (26), en particulier sous la forme d'un pinçage de déviation (90).

19. Conduite de fluide selon l'une quelconque des revendications 11 à 18, **caractérisée par** un élément de fermeture pour la fermeture étanche de la/chaque ouverture de passage (62) avec ou sans conducteur de raccordement (26).
